# NEUE EUROPÄISCHE PATENTSCHRIFT

(11) **EP 0 853 562 B2**
(45) Veröffentlichungstag und Bekanntmachung des Hinweises auf die Entscheidung über den Einspruch: **14.08.2002**
(45) Hinweis auf die Patenterteilung: 15.09.1999
(21) Anmeldenummer: 96924859.0
(22) Anmeldetag: 03.07.1996
(51) Int. Cl.: B60S 1/38

(54) **WISCHBLATT FÜR EINE SCHEIBENWISCHVORRICHTUNG EINES FAHRZEUGES**
WIPER BLADE FOR A VEHICLE WINDSCREEN WIPER DEVICE
BALAI D'ESSUIE-GLACE POUR SYSTEME D'ESSUIE-GLACES D'AUTOMOBILE

(30) Priorität: 02.10.1995 DE 19536742
(43) Veröffentlichungstag der Anmeldung: 22.07.1998
(73) Patentinhaber: Valeo Auto-Electric Wischer und Motoren GmbH, 74321 Bietigheim-Bissingen (DE)
(72) Erfinder: SCHMID, Eckhardt, D-74336 Brackenheim (DE); SCHOLL, Wolfgang, D-74376 Gemmrigheim (DE); EGNER-WALTER, Bruno, D-74076 Heilbronn (DE)
(74) Vertreter: Dreiss, Fuhlendorf, Steimle & Becker
(86) Internationale Anmeldenummer: EP9602906
(87) Internationale Veröffentlichungsnummer: WO9712788

(56) Entgegenhaltungen:
- EP-A- 0 565 057
- WO-A-90/09300
- DE-A- 3 532 535
- DE-A- 4 116 968
- GB-A- 1 117 095
- GB-A- 2 064 308
- GB-A- 2 190 834
- British Registered Design 1007441, issued British Registered Design 1007441, issued on 22.09.83 on 22.09.83
- British Registered Design 1007442, issued British Registered Design 1007442, issued on 22.09.83 on 22.09.83

## Beschreibung

Die Erfindung bezieht sich auf ein Wischblatt für eine Scheibenwischvorrichtung eines Fahrzeuges gemäß dem Oberbegriff des Anspruchs 1.

Ein Wischblatt für eine Scheibenwischvorrichtung eines Fahrzeuges, insbesondere eines Kraftfahrzeuges, mit einem Wischgummi, welcher an einem Tragbügelsystem gehalten und geführt ist, sind z. B. aus der GB-A-2 190 834 bekannt. Das Tragbügelsystem besitzt einen zumindest abschnittsweise im Querschnitt im wesentlichen U-artigen Hauptbügel, der um eine quer zu seiner Längsrichtung verlaufende Achse schwenkbar an einem Wischarm anzulenken ist. An seinen gegenüberliegenden Enden ist jeweils direkt oder über einen Zwischenbügel ein Krallenbügel angelenkt, in dessen Krallen der Kopfteil des Wischgummis gelagert ist. Der Hauptbügel besitzt eine Windleitvorrichtung zur Verstärkung der Anpreßkraft des Wischgummis gegen die zu wischende Scheibe unter Ausnutzung des anströmenden Fahrtwindes. Die Windleitvorrichtung ist an der dem anströmenden Fahrtwind zugewandten Vorderseite des Hauptbügels angeordnet und einstückig mit diesem gefertigt.

Nachteilig an diesem bekannten Wischblatt ist, daß die Windleitvorrichtung kürzer ist als die gesamte Länge des Hauptbügels, so daß sie bereits vor den Anlenkstellen für die Krallenbügel bzw. Zwischenbügel an den gegenüberliegenden Endabschnitten des Hauptbügels endet. Die aerodynamische Wirkungsfläche einer derartigen Windleitvorrichtung ist zu klein, um damit den größtmöglichen Wirkungseffekt hinsichtlich einer Verstärkung der Anpreßkraft zu erreichen. Außerdem schließt sich diese Windleitvorrichtung unmittelbar an die untere Kante der dem Fahrtwind zugewandten vorderen Seitenwand des Hauptbügels an. Die Windleitvorrichtung bildet im Querschnitt des Hauptbügels betrachtet somit einen Winkel mit der senkrecht zur Fahrzeugscheibe weisenden vorderen Seitenwand des Hauptbügels. Die Aerodynamik eines solchen Wischblattes hinsichtlich einer Verstärkungswirkung der Anpreßkraft des Wischgummis gegen die zu wischende Scheibe ist somit nicht optimal.

Aufgabe der Erfindung ist es, ein Wischblatt der eingangs beschriebenen Art derartig zu verbessern, daß eine größere aerodynamische Anpreßwirkung erreichbar ist.

Erfindungsgemäß wird die Aufgabe durch ein Wischblatt mit den Merkmalen des Anspruchs 1 gelöst.

Durch die freitragenden flügelartigen Verlängerungen der Windleitvorrichtung, welche den Tragbügel in Längsrichtung überragen, ist die wirksame Fläche der Windleitvorrichtung bedeutend vergrößert worden. Je nach Ausführung des Wischblattes kann die Vergrößerung mehr als 50% gegenüber einem bekannten Wischblatt betragen. Es dürfte klar sein, daß eine derartig vergrößerte Windleitvorrichtung auch eine wesentlich größere Verstärkung der Anpreßkraft des Wischgummis gegen die zu wischende Scheibe zur Folge hat. Dadurch, daß die Windleitvorrichtung außerdem nunmehr von der vorderen, dem Fahrtwind zugewandten Kante des Hauptbügelrückens ausgeht, wird eine weitere Verbesserung des aerodynamischen Verhaltens des Wischblattes erreicht, wodurch eine zusätzliche Verstärkung der Anpreßkraft erzielbar ist.

Dadurch, daß die Windleitvorrichtung einstükkig mit dem Hauptbügel des Tragbügelsystems gefertigt ist, erhält der Hauptbügel, welcher die ihm untergeordneten Bügel des Tragbügelsystems hält und führt, eine wesentlich größere mechanische Steifigkeit als ein Hauptbügel ohne integrierte Windleitvorrichtung. Diese Maßnahme, die von noch größerer Bedeutung ist, wenn der Hauptbügel bzw. das ganze Tragbügelsystem aus Kunststoff gefertigt ist, berwirkt somit eine weitere Verbesserung der Wischqualität.

Durch eine vorteilhafte Ausgestaltung der Erfindung gemäß Anspruch 2, wonach sich die flügelartigen Verlängerungen der Windleitvorrichtung in Längsrichtung des Wischblattes bis über einen großen Teil der äußeren Krallenbügel und damit auch vollständig über eventuell vorhandene Zwischenbügel des Traggestells erstrecken, wird einerseits eine bedeutende Vergrößerung der wirksamen Fläche der Windleitvorrichtung erreicht, andererseits werden auch die äußeren Enden des Wischblattes bzw. des Traggestells besser gegenüber dem anströmenden Fahrtwind abgeschirmt. Letzteres bewirkt eine Verbesserung des aerodynamischen Verhaltens des Wischblattes, weil unerwünschte Verwirbelungen der Luitströmung an nicht abgeschirmten Teilen des Wischblattes bzw. des Traggestelles vermieden werden.

Eine weitergehende Verbesserung des aerodynamischen Verhaltens des Wischblattes wird gemäß einer vorteilhaften Weiterbildung nach Anspruch 3 dadurch erreicht, daß die äußeren Krallenbügel und, wenn vorhanden, die Zwischenbügel im Bereich ihrer Anlenkstelle an dem jeweils übergeordneten Bügel, innerhalb dessen Querschnittsprofil sie jeweils angeordnet sind, derartig gestuft gestaltet sind, daß die Außenflächen von Hauptbügel und Krallenbügel bzw. von Hauptbügel und Zwischenbügel und Zwischenbügel und Krallenbügel gewissermaßen absatzlos ineinander übergehen.

Eine andere vorteilhafte Ausgestaltung gemäß Anspruch 4 sieht vor, daß der Hauptbügelrücken mit Durchbrüchen versehen ist, die sich über seine gesamte Breite erstrecken. Ein Teil des anströmenden Fahrtwindes, der an der Unterseite der Windleitvorrichtung hindurchtritt, kann somit den Hauptbügelrücken durchströmen. Dadurch wird ebenfalls durch Verringerung der Luftwirbelbildung eine Verbesserung der Aerodynamik des Wischblattes erreicht.

Eine andere vorteilhafte Ausgestaltung der Erfindung gemäß Anspruch 5 sieht vor, daß das gesamte Tragbügelsystem des Wischblattes einschließlich der Windleitvorrichtung und der Gelenkbolzen, welche die Krallenbügel mit dem Hauptbügel bzw. die Krallenbügel mit den Zwischenbügeln und die Zwischenbügel mit dem Hauptbügel verbinden, aus wiederverwertbarem Kunststoff besteht. Die Herstellung des Traggestells, insbesondere des Hauptbügels mit integrierter Windleitvorrichtung aus Kunststoff eröffnet vielfältige Gestaltungsmöglichkeiten hinsichtlich strömungsgünstiger Formen der einzelnen Teile bzw. des gesamten Wischblattes. Neben einer vorteilhaften Gewichtsverminderung gegenüber einer Ausführung in Metall, wird durch die Verwendung von wiederverwertbarem Kunststoff für die Herstellung des Traggestells eine vorteilhafte Umweltverträglichkeit erreicht. Außerdem ist außer dem Entfernen des Wischgummis vom Traggestell kein weiterer Demontageaufwand als Vorbereitung für die Aufbereitung verbrauchter Wischblätter nötig.

Wenn der Hauptbügel insgesamt im Querschnitt U-artig ausgebildet ist und die Windleitvorrichtung somit von der zwischen dem Hauptbügelrücken und der vorderen Seitenwand gebildeten Kante ausgeht, kann sich die unterhalb der Windleitvorrichtung in Richtung auf die zu wischende Scheibe erstreckende vordere Seitenwand nachteilig auf die Luftströmung auswirken und die gewünschte optimale Aerodynamik stören. Deshalb ist in einer vorteilhaften Weiterbildung der Erfindung gemäß Anspruch 6 vorgesehen, daß die vordere Seitenwand des Hauptbügels nur in den Bereichen des Einhängekastens für das Wischarmende und der Anlenkstellen der Krallenbügel bzw. der Zwischenbügel vorhanden und ansonsten entfernt ist. Dadurch kann der an der Unterseite der Windleitvorrichtung entlangströmende Teil des Fahrtwindes ungehindert und ohne zusätzliche schädliche Wirbelbildung strömen.

Für den Fall, daß besonderer Wert auf eine möglichst spielfreie seitliche Führung der untergeordneten Bügel (das sind Zwischenbügel oder Krallenbügel) am Hauptbügel gelegt wird und dabei eine geringfügige Verschlechterung der Aerodynamik gegenüber einer Ausgestaltung nach Anspruch 6 in Kauf genommen wird, wird eine vorteilhafte Ausgestaltung gemäß Anspruch 7 empfohlen.

Damit die Störungen der Aerodynamik des Wischblattes durch den im Bereich des Einhängekastens für das Wischarmende vorhandenen Abschnitt der vorderen Seitenwand des Hauptbügels nicht zu groß wird, wird weiterhin eine Ausgestaltung gemäß Anspruch 8 als vorteilhaft empfohlen. Diese Maßnahme ist außerdem geeignet, die Stabilität des Traggestells zu Erhöhen.

Eine Ausgestaltung der Erfindung gemäß Anspruch 9 hat insbesondere den Vorteil, daß die Gelenke des Traggestells zwischen den jeweils miteinander verbundenen Bügeln einerseits leicht beweglich und andererseits stabil genug sind, um die zusätzlichen, durch die Windleitvorrichtung erzeugten Anpreßkräfte aushalten zu können.

Nachfolgend wird die Erfindung anhand eines Ausführungsbeispieles näher erläutert. In den zugehörigen Zeichnungen zeigen
- Fig. 1: ein Wischblatt in perspektivischer Darstellung,
- Fig. 2: in vergrößerter Darstellung den Schnitt II-II aus Fig. 1, jedoch ohne Wischgummi,
- Fig. 3: in vergrößerter Darstellung den Schnitt III-III aus Fig. 1, jedoch ohne Wischgummi,
- Fig. 4: in vergrößerter Darstellung den Schnitt IV-IV gemäß Fig. 1, jedoch ohne Wischgummi, und
- Fig. 5: ein anderes Ausführungsbeispiel des Wischblattes, Schnitt II-II aus Fig 1, jedoch ohne Wischgummi.

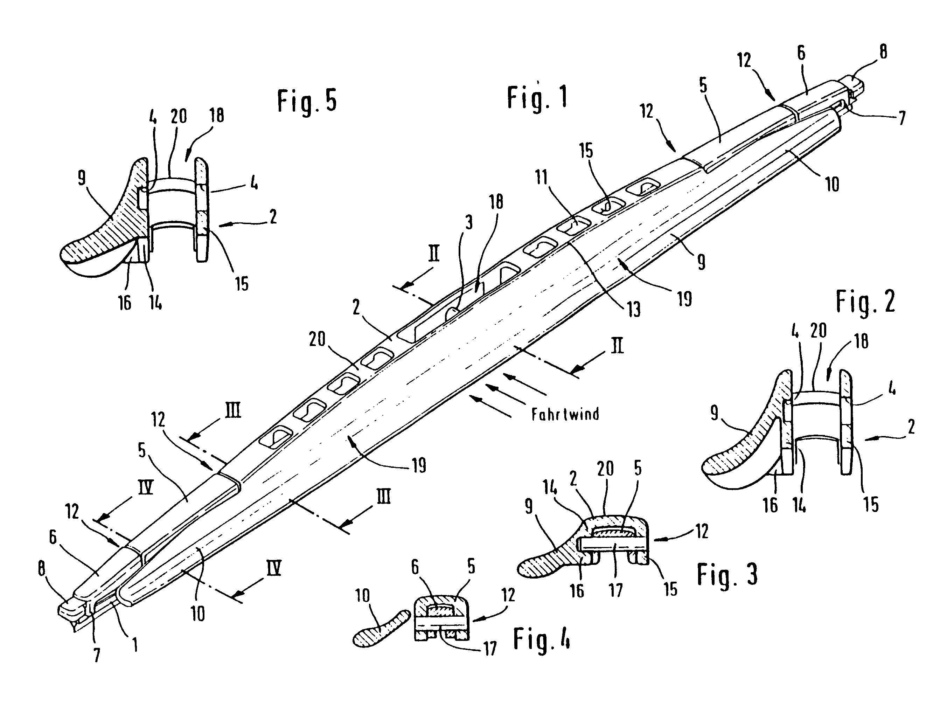

Bei dem in Fig. 1 dargestellten Wischblatt ist ein Wischgummi 1, welcher beim Betrieb des Scheibenwischers die zu wischende Scheibe überstreicht, an einem Tragbügelsystem gehalten und geführt. Das Tragbügelsystem, welches insgesamt aus einem wiederverwertbaren Kunststoff hergestellt ist, besitzt einen Hauptbügel 2, der in seinem mittleren Bereich einen Einhängekasten 18 aufweist, in welchem das freie Ende eines Wischarmes um eine quer zur Längsrichtung des Hauptbügels 2 verlaufende Achse schwenkbar mit dem Hauptbügel 2 zu verbinden ist. Zur Kennzeichnung dieser Schwenkachse ist in Fig. 1 ein Gelenkbolzen 3 eingezeichnet, der entweder Bestandteil des Hauptbügels 2 sein kann oder der als separates Bauteil zur Wischarm-Wischblattverbindung dient. In Fig. 2 ist dieser Gelenkbolzen 3 nicht vorhanden, es sind lediglich die Lagerbohrungen 4 erkennbar, in denen dieser Gelenkbolzen anzuordnen ist. Aus Fig. 1 ist weiterhin ersichtlich, daß an den gegenüberliegenden Enden des Hauptbügels 2 jeweils ein Zwischenbügel 5 angelenkt ist, und jeweils am äußeren Ende des Zwischenbügels 5 ist ein äußerer Krallenbügel 6 angelenkt. Der Wischgummi 1 wird von den Krallen 7 des Traggestells gehalten, von denen nur die äußeren sichtbar sind. Die Längsverschieblichkeit des Wischgummis 1 in den Krallen 7 des Traggestells wird durch die Endstücke 8 begrenzt, welche jeweils an einem Ende des Wischgummis 1 befestigt sind und in Wirkverbindung mit dem äußeren Krallenbügel 6 stehen. Als ein wesentliches Merkmal des Wischblattes ist in Fig. 1 eine Windleitvorrichtung 9 erkennbar, die an der dem Fahrtwind zugewandten Längsseite des Traggestells angeordnet ist und einstückig mit dem Hauptbügel 2 gefertigt ist. Diese Windleitvorrichtung 9 zeichnet sich an ihren Enden durch jeweils eine in Längsrichtung des Wischblattes weisende, freitragende, flügelartige Verlängerung 10 aus, welche den eigentlichen Hauptbügel 2 in dessen Längsrichtung überragt. Dabei erstrecken sich die beiden flügelartigen Verlängerungen 10 jeweils über den Zwischenbügel 5 und den größten Teil des äußeren Krallenbügels 6, so daß nur ein relativ kleines Stück des Traggestells und des Wischgummis 1 die Windleitvorrichtung 9 in Längsrichtung überragt.

Aus Fig. 1 ist noch ersichtlich, daß der Hauptbügelrücken 20 zahlreiche Durchbrüche 11 aufweist, die sich über die ganze Breite des Hauptbügelrückens 20 erstrecken. Diese Durchbrüche 11 können in an sich bekannter Weise an einem Teil des anströmenden Fahrtwindes durchströmt werden. Außerdem ist zu erkennen, daß im Bereich der Anlenkstellen 12 der Zwischenbügel 5 am Hauptbügel 2 und der äußeren Krallenbügel 6 an den Zwischenbügeln 5 die Außenfläche der Zwischenbügel 5 sich nahezu absatzlos an die Außenfläche des Hauptbügels 2 und die Außenfläche des äußeren Krallenbügels 6 nahezu absatzlos an die Außenfläche des Zwischenbügels 5 anschließt. Auch die äußere Form der Endstücke 8 ist an die Form der äußeren Krallenbügel 6 angepaßt. Dadurch ergibt sich insgesamt ein günstigerer strömungstechnischer Effekt und andererseits wird auch die stilistische Wirkung dieses Wischblattes dadurch verbessert.

Es ist weiterhin erkennbar, daß die Windleitvorrichtung 9 von der Kante 13 des Hauptbügelrückens 20 ausgeht, die dem Fahrtwind zugewandt ist. In den Fig. 2, 3 und 5 ist zu sehen, daß die Windleitvorrichtung 9 stellenweise von Rippen 16 abgestützt ist, die sich zwischen der vorderen Seitenwand 14 und der Windleitvorrichtung 9 erstrecken. Bei dem Schnitt von Fig. 3 befindet sich diese Rippe 16 vorteilhafterweise an einer Anlenkstelle 12, so daß der in den Seitenwänden 14 und 15 gelagerte Gelenkbolzen 17 besseren Halt findet.

In den Fig. 2 bis 5 ist zu erkennen, daß der Hauptbügel 2, der Zwischenbügel 5 und der Krallenbügel 6 im Querschnitt U-artig gestaltet sind und daß der Hauptbügel 2 den Zwischenbügel 5 und der Zwischenbügel 5 den Krallenbugel 6 im Profil übergreift. An den Anlenkstellen 12 sind die einzelnen Bügel also jeweils über einen Gelenkbolzen 17 miteinander verbunden, der quer zur Längsrichtung des Wischblattes angeordnet ist. Die Gelenkbolzen 17 sind dabei ebenfalls aus wiederverwertbarem Kunststoff hergestellt und jeweils an dem untergeordneten (das heißt, an dem inneren) Bügel unverdrehbar und in axialer Richtung gesichert gehalten und in dem übergordneten (das heißt, in dem äußeren) Bügel drehbar gelagert.

Fig. 5 zeigt insbesondere, daß im Bereich des Einhängekastens 18 der Raum zwischen der Windleitvorrichtung 9 und der vorderen Seitenwand 14 des Hauptbügels 2 vollständig mit Material ausgefüllt ist.

Abschließend wird noch darauf hingewiesen, daß bei einer vorteilhaften Ausgestaltung der Erfindung, bei welcher die vordere Seitenwand 14 des Hauptbügels 2 nur abschnittsweise vorhanden ist, in den Bereichen 19 (Fig. 1) des Hauptbügels 2 Abschnitte der vorderen Seitenwand 14 vorhanden sein können. In diesen Bereichen 19 dienen die verbliebenen Abschnitte der vorderen Seitenwand 14 sowie die hintere Seitenwand 15 zur seitlichen Führung des untergeordneten Zwischen- oder Krallenbügels am Hauptbügel 2. Die in den Bereichen 19 vorhandenen Abschnitte der vorderen Seitenwand 14 befinden sich jeweils im Bereich des inneren Endes des betreffenden untergeordneten Bügels.

### Bezugszeichenliste

- 1: Wischgummi
- 2: Hauptbügel
- 3: Gelenkbolzen
- 4: Lagerbohrung
- 5: Zwischenbügel
- 6: (äußerer) Krallenbügel
- 7: Kralle
- 8: Endstück
- 9: Windleitvorrichtung
- 10: (flügelartige) Verlängerung
- 11: Durchbruch
- 12: Anlenkstelle
- 13: Kante
- 14: vordere Seitenwand
- 15: hintere Seitenwand
- 16: Rippe
- 17: Gelenkbolzen
- 18: Einhangekasten
- 19: Bereich
- 20: Hauptbügelrücken

## Patentansprüche

1. Wischblatt für eine Scheibenwischvorrichtung eines Fahrzeugs, insbesondere eines Kraftfahrzeuges, mit einer Windleitvorrichtung (9) zur Verstärkung der Anpresskraft eines an einem Tragbügelsystem geführten Wischgummis (1) gegen die zu wischende Scheibe durch den anströmenden Fahrtwind, wobei das Tragbügelsystem aus einem im Querschnitt U-artigen Hauptbügel (2) mit einem Hauptbügelrücken (20) sowie einer vorderen Seitenwand (14) und einer hinteren Seitenwand (15), die sich parallel zueinander vom Hauptbügelrücken (20) nach unten erstrecken, besteht, der um eine quer zu seiner Längsrichtung verlaufenden Achse schwenkbar mit einem Wischarm verbindbar ist und an dessen gegenüberliegenden Enden jeweils direkt oder über einen Zwischenbügel (5) mindestens ein Krallenbügel (6) angelenkt ist, und wobei die Windleitvorrichtung (9) an der dem Fahrtwind zugewandten Längsseite des Wischblattes angeordnet ist und als integraler Bestandteil des Hauptbügels (2) einstückig mit diesem gefertigt ist und in Längsrichtung an ihren gegenüberliegenden Enden freitragende, flügelartige Verlängerungen (10) besitzt, die den Hauptbügel (2) in seiner Längsrichtung überragen, **dadurch gekennzeichnet, dass** die Windleitvorrichtung (9) prinzipiell von der dem Fahrtwind zugewandten, vorderen Kante (13) des Hauptbügelrückens (20) ausgeht und sich in der Form eines *eine geschlossene Oberfläche aufweisenden* Windleitprofils in Richtung auf die zu wischende Scheibe und entgegen dem Fahrtwind erstreckt.

2. Wischblatt nach Anspruch 1, **dadurch gekennzeichnet, daß** sich die flügelartigen Verlängerungen (10) der Windleitvorrichtung (9) in Längsrichtung des Wischblattes bis über einen großen Teil der äußeren Krallenbügel (6) des Traggestells erstrecken.

3. Wischblatt nach einem der vorhergehenden Ansprüche, wobei in den jeweiligen Anlenkstellen (12) die äußeren Krallenbügel (6) von dem Querschnittsprofil des Hauptbügels (2) übergriffen werden oder bei Vorhandensein von Zwischenbügeln (5) die äußeren Krallenbügel (6) von dem Querschnittsprofil der Zwischenbügel (5) und die Zwischenbügel (5) von dem Querschnittsprofil des Hauptbügels (2) übergriffen werden, **dadurch gekennzeichnet, daß** die äußeren Krallenbügel (6) und, wenn vorhanden, die Zwischenbügel (5) im Bereich ihrer Anlenkstellen (12) derart stufenartig ausgebildet sind, daß sich die Außenflächen von Hauptbügel (12) und äußeren Krallenbügeln (6) und bei vorhandenen Zwischenbügeln (5) die Außenflächen von Hauptbügel (2) und Zwischenbügeln (5) sowie Zwischenbügeln (5) und äußeren Krallenbügeln (6) im Prinzip absatzlos aneinander anschließen.

4. Wischblatt nach einem der vorhergehenden Ansprüche, **dadurch gekennzeichnet, daß** der Hauptbügelrücken (20) mit Durchbrüchen (11) versehen ist, die sich über seine gesamte Breite erstrecken und den an der Unterseite der Windleitvorrichtung (9) entlangströmenden Teil des Fahrtwindes zumindest zum größten Teil hindurchtreten lassen.

5. Wischblatt nach einem der vorhergehenden Ansprüche, **dadurch gekennzeichnet, daß** das gesamte Tragbügelsystem einschließlich Windleitvorrichtung (9) und Gelenkbolzen (17), welche die Krallenbügel (6) mit dem Hauptbügel (2) bzw. die Krallenbügel (6) mit den Zwischenbügeln (5) und die Zwischenbügel (5) mit dem Hauptbügel (2) verbinden, aus, vorzugsweise wiederverwertbarem, Kunststoff besteht.

6. Wischblatt nach einem der vorhergehenden Ansprüche, **dadurch gekennzeichnet, daß** die vordere Seitenwand (14) des Hauptbügels (2) nur in den Bereichen des Einhängekastens 18) für das Wischarmende und der Anlenkstellen (12) der Krallenbügel (6) bzw. der Zwischenbügel (5) vorhanden und ansonsten entfernt ist.

7. Wischblatt nach Anspruch 6, **dadurch gekennzeichnet, daß** zusätzlich in den Bereichen (19) der inneren Enden der Krallenbügel (6) bzw. der Zwischenbügel (5) die vordere Seitenwand (14) des Hauptbügels (2) zur seitlichen Führung des Krallenbügels (6) bzw. des Zwischenbügels vorhanden ist.

8. Wischblatt nach Anspruch 6 oder 7, **dadurch gekennzeichnet, daß** im Bereich des Einhängekastens (18) für das Wischarmende der Raum zwischen der vorderen Seitenwand (14) des Hauptbügels und der vom Fahrtwind abgewandten Rückseite der Windleitvorrichtung (9) geschlossen bzw. mit Material ausgefüllt ist.

9. Wischblatt nach einem der vorhergehenden Ansprüche, **dadurch gekennzeichnet, daß** die in den Anlenkstellen (12) in fluchtenden Bohrungen von Hauptbügel (2) und Krallenbügel (6) oder Zwischenbügel (5) oder von Zwischenbügel (5) und Krallenbügel (6) angeordneten Gelenkbolzen (17) jeweils mit dem im Querschnitt innenliegenden Bügel drehfest verbunden und axial gesichert und in dem außenliegenden Bügel drehbar gelagert sind.

## Claims

1. Wiper blade for a windshield wiper device of a vehicle, especially a motor vehicle, with a wind-directing device (9) for amplifying the down-force of a wiper squeegee (1) guided on a support frame system against the windshield to be wiped by means of the oncoming relative wind, and in which the support frame system consists of a main support (2), U-shaped in cross section, having a main support spine (20) as well as a front side wall (14) and a rear side wall (15), which protrude downward and parallel to each other from the main support spine (20), which is connectable rotatably around an axis transverse to its longitudinal direction with a wiper arm and on whose opposite ends, either directly or indirectly across an intermediate support (5), at least one claw support (6) is hinged, and for which the wind-directing device (9) is mounted on the longitudinal side turned toward the relative wind of the wiper blade and is manufactured as an integral component of the main support (2), in one piece with it, and that the wind-directing device (9), in its longitudinal direction, possesses on its opposite ends cantilevered, wing-like elongations (10), which protrude beyond the main support (2) in its longitudinal direction, **characterized in that** the wind-directing device (9) goes out from the front edge 13 facing the relative wind of the main support spine (20) and extends in the form of a wind-directing profile in a direction toward the windshield to be wiped and against the relative wind, with the wind-directing profile having a closed surface.

2. Wiper blade according to Claim 1, **characterized in that** the wing-like elongations (10) of the wind-directing device (9) extend in the longitudinal direction of the wiper blade across most of the outer claw supports (6) of the support frame.

3. Wiper blade according to one of the preceding Claims, whereby in the given hinge points (12) the outer claw supports (6) are engaged by the cross-sectional profile of the main support (2), or, when intermediate supports (5) are present, the outer claw supports (6) are engaged by the cross-sectional profile of the intermediate supports (5) and the intermediate supports (5) are engaged by the cross-sectional profile of the main support (2), **characterized in that** the outer claw supports (6) and, when present, the intermediate supports (5), in the region of their hinge points (12), are formed in gradations, so that the outer surfaces of the main support (12) and the outer claw supports (6), and, when intermediate supports (5) are present, the outer surfaces of the main support (2) and of the intermediate supports (5) as well as of the intermediate supports (5) and the outer claw supports (6) in principle adjoin one another without a break.

4. Wiper blade according to one of the preceding Claims, **characterized in that** the main support spine (20) is provided with pigeonholes (11), that extend across its entire width and permit the portion of the relative wind streaming along on the underside of the wind-directing device (9) to pass through, at least for the most part.

5. Wiper blade according to one of the preceding Claims, **characterized in that** the entire support frame system, including the wind-directing device (9) and joint bolts (17) which connect the claw supports (6) with the main support (2) or connect the claw supports (6) with the intermediate supports (5) and connect the intermediate support (5) with the main support (2) are made of plastic, preferably a recyclable plastic.

6. Wiper blade according to one of the preceding Claims, **characterized in that** the front side wall (14) of the main support (2) is present only in the regions of the suspension case (18) for the wiper arm end and of the hinge points (12) of the claw supports (6) or of the intermediate supports (5) and otherwise is removed.

7. Wiper blade according to Claim 6, **characterized in that** additionally, in the regions (19) of the inner ends of the claw supports (6) or of the intermediate supports (5) the front side wall (14) of the main support (2) is present for lateral guidance of the claw support (6) or of the intermediate support.

8. Wiper blade according to Claim 6 or 7, **characterized in that** in the region of the suspension case (18) for the wiper arm end, the area between the front side wall (14) of the main support and the rear side (turned away from the relative wind) of the wind-direction device (9) is closed or filled in with material.

9. Wiper blade according to one of the preceding Claims, **characterized in that** the joint bolts (17) mounted at the hinge points (12) in aligned boreholes of the main support (2) and claw support (6) or intermediate support (5) or of the intermediate support (5) or claw support (6) are in each case non-rotatably connected with the support lying on the inside in cross-section and axially secured, and mounted rotatably in the support lying outside.

## Revendications

1. Balai d'essuie-glace pour un système d'essuie-glace d'un véhicule, en particulier d'un véhicule automobile, comprenant un dispositif directeur de vent (9) pour renforcer la force d'application d'une lame de caoutchouc d'essuie-glace (1) guidée sur un système d'étriers de support contre la vitre à essuyer par le vent relatif soufflant, dans lequel le système d'étriers de support est constitué d'un étrier principal (2) en forme de U en coupe transversale ayant un dos (20) d'étrier principal, ainsi qu'une paroi latérale avant (14) et une paroi latérale arrière (15), qui s'étendent vers le bas du dos (20) de l'étrier principal parallèlement l'une à l'autre, étrier principal qui peut être raccordé à un bras d'essuie-glace à pivotement autour d'un axe s'étendant transversalement à sa direction longitudinale et aux extrémités opposées respectives duquel est articulé au moins un étrier à griffes (6) directement ou par l'entremise d'un étrier intermédiaire (5), et dans lequel le dispositif directeur de vent (9) est agencé sur le côté longitudinal, tourné vers le vent relatif, du balai d'essuie-glace, est fabriqué comme composant intégral de l'étrier principal (2) d'une seule pièce avec celui-ci et présente dans la direction longitudinale des prolongements (10) en forme d'ailes en porte-à-faux à ses extrémités opposées, qui dépassent en hauteur l'étrier principal (2) dans sa direction longitudinale, **caractérisé en ce que** le dispositif directeur de vent (9) part principalement de l'arête avant (13), tournée vers le vent relatif, du dos (20) de l'étrier principal et s'étend sous la forme d'un profil directeur du vent comportant une surface fermée en direction de la vitre à essuyer et à l'encontre du vent relatif.

2. Balai d'essuie-glace selon la revendication 1, **caractérisé en ce que** les prolongements (10) en forme d'ailes du dispositif directeur de vent (9) s'étendent dans la direction longitudinale du balai d'essuie-glace sur une grande partie des étriers à griffes externes (6) du cadre de support.

3. Balai d'essuie-glace selon l'une quelconque des revendications précédentes, dans lequel, aux points d'articulation respectifs (12), les étriers à griffes externes (6) sont recouverts par le profil en coupe transversale de l'étrier principal (2) ou, en présence d'étriers intermédiaires (5), les étriers à griffes externes (6) sont recouverts par le profil en coupe transversale des étriers intermédiaires (5) et les étriers intermédiaires (5) par le profil en coupe transversale de l'étrier principal (2), **caractérisé en ce que** les étriers à griffes externes (6) et, lorsqu'ils sont présents, les étriers intermédiaires (5) sont conformés en gradins dans la zone de leurs points d'articulation (12) de sorte que les surfaces externes de l'étrier principal (12) et des étriers à griffes externes (6) et, dans le cas où les étriers intermédiaires (5) sont présents, les surfaces externes de l'étrier principal (2) et des étriers intermédiaires (5) ainsi que des étriers intermédiaires (5) et des étriers à griffes externes (6) se raccordent l'un à l'autre en principe sans gradins.

4. Balai d'essuie-glace selon l'une quelconque des revendications précédentes, **caractérisé en ce que** le dos (20) de l'étrier principal présente des ouvertures transversales (11) qui s'étendent sur toute sa largeur et laissent passer au moins la plupart de la partie du vent relatif s'écoulant longitudinalement sur la partie inférieure du dispositif directeur de vent (9).

5. Balai d'essuie-glace selon l'une quelconque des revendications précédentes, **caractérisé en ce que** tout le système d'étriers de support, y compris le dispositif directeur de vent (9) et les axes d'articulation (17), qui raccordent les étriers à griffes (6) à l'étrier principal (2) ou les étriers à griffes (6) aux étriers intermédiaires (5) et les étriers intermédiaires (5) à l'étrier principal (2), est constitué d'une matière plastique, de préférence réutilisable,

6. Balai d'essuie-glace selon l'une quelconque des revendications précédentes, **caractérisé en ce que** la paroi latérale avant (14) de l'étrier principal (2) n'est présente que dans les zones de la boîte de suspension (18) pour l'extrémité du bras d'essuie-glace et les points d'articulation (12) des étriers à griffes (6) ou des étriers intermédiaires (5) et en est autrement éliminée.

7. Balai d'essuie-glace selon la revendication 6, **caractérisé en ce qu'**en plus, dans les zones (19) des extrémités internes des étriers à griffes (6) ou des étriers intermédiaires (5), la paroi latérale avant (14) de l'étrier principal (2) est présente pour assurer le guidage latéral de l'étrier à griffes (6) ou de l'étrier intermédiaire,

8. Balai d'essuie-glace selon la revendication 6 ou 7, **caractérisé en ce que**, dans la zone de la boîte de suspension (18) pour l'extrémité du bras d'essuie-glace, l'espace compris entre la paroi latérale avant (14) de l'étrier principal et le dos, éloigné du vent relatif, du dispositif directeur de vent (9) est fermé ou rempli de matériau.

9. Balai d'essuie-glace selon l'une quelconque des revendications précédentes, **caractérisé en ce que** les axes d'articulation (17) agencés aux points d'articulation (12) dans des orifices alignés de l'étrier principal (2) et des étriers à griffes (6) ou des étriers intermédiaires (5) ou des étriers intermédiaires (5) et des étriers à griffes (6) sont respectivement raccordés à l'étrier situé à l'intérieur en coupe transversale de manière solidaire en rotation, fixés axialement et montés à rotation dans l'étrier situé à l'extérieur.
